# EUROPEAN PATENT APPLICATION

(11) **EP 4 834 115 A1**
(43) Date of publication of application: **04.11.2026**
(21) Application number: 25173742.5
(22) Date of filing: 30.04.2025
(51) Int. Cl.: A22C 11/12

(54) **CLOSING TOOL SYSTEM**

(71) Applicant: Poly-clip System GmbH & Co. KG, 65795 Hattersheim (DE)
(72) Inventor: Butschan, Jens, 65719 Hofheim am Taunus (DE)
(74) Representative: Eisenführ Speiser

(57) **Abstract**

According to the present invention, there is provided a closing tool system (100) for closing at least one closure clip (C) around an at least approximately content-free plait-like portion (P) of a sausage-shaped product (S), the plait-like portion (P) defines a closing axis (CA), in a clipping machine (CM) for producing sausage-shaped products (S), like sausages, by reversibly moving the closing tool system (100) in a closing direction (CD). The system (100) comprises a first closing tool (110; 210; 310; 410), preferably a punch, having at least a first closing portion (122; 222, 322, 422) for effecting the closure of a first closure clip (C) in a first chain of closure clips (CL), and a first cutting element (124; 224; 324; 424), being part of the first closing tool (110; 210; 310; 410) and having at least one cutting edge for shearing-off the first closure clip (C) from the first chain of closure clips (CL) which extends at least approximately parallel to the closing axis (CA). The first cutting element (124; 224; 324; 424) has a cutting edge that is at least partially inclined with respect to a direction parallel to the closing axis (CA). According to the present invention, there is provided a closure clip (C) for closing filled compartments of a substantially tubular or bag-shaped packaging material (M). The closure clip (C) being movable from an open configuration to a closed configuration, preferably by a closing tool system (100) according to the present invention.

## Description

The present invention relates to a closing tool system for processing closure clip, preferably at least approximately U-shaped closure clips, in a clipping machine for producing sausage-shaped products, like sausages, by reversibly moving the closing tool system in a closing direction.

For producing sausage-shaped products, such as sausages, packaging machines, such as clipping machines, are known, in which filling material, such as a flowable or granular filling material, is fed into a tubular or bag-shaped packaging casing which is stored or supported on a filling tube and which is closed at its front end by closure means, such as at least one closure clip, i.e. the end of the packaging casing facing in the feeding direction of the filling material. After a predetermined portion or amount of filling material has been filled into the tubular or bag-shaped packaging casing, the filled tubular or bag-shaped packaging casing is gathered by gathering means, a plait-like portion or section which is at least substantially free from filling material is formed thereto, and at least one closure clip is placed and closed on said plait-like portion by a clipping device for closing the portion of the tubular or bag-shaped packaging casing just filled. Additionally, a second closure clip may be placed and closed on said plait-like portion, for closing the front end of the portion of the tubular or bag-shaped packaging casing to be filled next.

The clipping device usually includes two closing tools for placing and closing the one or two closure clips, a punch and a die.

If closure clips are processed, which are coupled to each other by connecting portions arranged at the free ends of the clip legs to form a chain of clips, i.e. so called "R-Clips", the first clip in the chain of clips in usually placed in the lower closing tool or die, and the lower closing tool and the upper closing tool, the punch, are moved towards each other, whereby the plait-like portion formed to the casing material, is placed in the closure clip. Punch and die include a cutting edge, which cuts off the first clip in the chain of clips, which is placed in the die, and close said closure clip.

If closure clips are processed, which are positioned side by side to form a U-shaped row of closure clips, or called "S-Clips", the first clip in the row of clips is provided below the punch with the opening of the U facing towards the die, and the punch moves said closure clip towards the die, for placing and closing the closure clip on a plait-like portion of the casing material.

If it is intended to store or deposit sausage-shaped products on a rod-like or rod-shaped element, such as a smoking rod, e.g. for further treatment such as cooking or smoking, a suspension element, such as a suspension loop, can be attached to one end of each sausage-shaped product by a closure clip that closes the respective end of the respective sausage-shaped product. The sausage-shaped product is suspended on a rod-like element, which may be stored in a storage frame or carriage for further treatment.

From EP 1 747 996 A1, a clipping machine for producing sausage-shaped products is known, which includes a closing arrangement for processing R-clips, with a lower lever, on which a die is arranged, and along which a chain of clips is guided towards the die, and an upper lever, which carries a punch. The punch and the die have cutting edges for cutting off a clip from a clip wire. The position of the die on the lower lever may be varied to adjust the clearance between the cutting edges of the punch and the die.

EP 1 967 074 A1 describes a closing tool arrangement for a clipping machine for processing R-clips, which includes a punch and a die, and in which punch and die are detachable fixed to respective closing tool carriers by specific fixation devices.

With these known clipping machines, sausage-shaped products may reliable be produced. However, the closing tool are exposed to high burden during the cutting process and the closing operation. In particular, dependent on the material of the closure clips, high forces act to the closing tools, which may be damaged or parts of them may break off, which may cause production losses and damages to the clipping machine.

Thus, it is an object of the present invention to overcome the above mentioned drawbacks and to provide a closing tool system for a clipping machine for producing sausage-shaped products, that reduce the risk of damage to the sausage-products and the clipping machine.

According to the present invention, there is provided a closing or closure tool system for closing at least one closure clip around an at least approximately content- or filling-free plait-like portion of a sausage-shaped product which preferably contains a flowable or granular filling, such as sausage meat or chemical materials, wherein the plait-like portion defines a closing axis, in a clipping machine for producing sausage-shaped products, like sausages, by reversibly moving the closing tool system in a closing direction. The system comprises a first closing or closure tool, preferably a punch, having at least a first closing portion for effecting the closing or closure of a first closure clip in a first chain of closure clips, and a first cutting element being part of the first closing tool and having at least one cutting edge for cutting- or shearing-off the first closure clip from the first chain of closure clips. In the inventive system, the at least one first cutting edge extends at least approximately in the same direction as the closing axis, and is at least partially inclined with respect to a direction parallel to the closing axis. If the closing axis is at least approximately horizontal, the inclination of the cutting edge refers to the horizontal and can form an acute angle with it. If the closing axis is at least approximately vertical, the inclination of the cutting edge refers to the vertical and can form an acute angle with it. The acute angle can be in a range between 1° and 45°, preferably between 1° and 35°, more preferably between 1° and 25°, and most preferably between 1° and 15°.

In this configuration, the contact area between the at least one cutting edge of the first cutting element and the closure clip, particularly, the connecting portions between two consecutive or neighbouring closure clips of the first chain of closure clips, is reduced to an approximately point contact, whereby the pressure force acting on the cutting edge is reduced. In addition, wear on the cutting element is also reduced, and the cutting element is protected against getting blunt or parts breaking there off. In addition, wear on the cutting element such as blunting or breaking off parts of the cutting edge, is also reduced. This configuration further allows a faster operation of the clipping machine, at least a faster shearing or cutting step.

In a preferred embodiment of the inventive closing tool system, the first cutting element may be removably or detachably mounted or fixed to the first closing tool, whereby a cutting element may be easily exchanged by or replaced with a new cutting element, when it is blunt or damaged, This makes it easy to ensure the closure quality and reduces maintenance time and costs.

Alternatively, the first cutting element and the first closing tool may be formed integrally. Due to the specific design of the cutting edge, the closing tool has a longer service life overall.

In a further preferred embodiment, the first closing tool comprises a second closing portion for effecting the closure of a first closure clip in a second chain of closure clips, with a second cutting element, preferably, wherein a gap is provided between the first and second closing portion and/or the first and second cutting element, wherein the second cutting element has at least one cutting edge for shearing- or cutting-off the first closure clip from the second chain of closure clips, and the cutting edge is at least partially inclined with respect to a direction parallel to the closing axis.

In this embodiment, it is possible to close two closure clips at the same, time, a first closure clip for closing the rear end of the tubular packaging casing just filled, and the front end of the tubular casing to be filed next.

Moreover, the second closing portion, and the second cutting element, respectively, provide the same advantages, particularly with respect to the reduced pressure force and the reduced wear, as explained in conjunction with the closing portion and the first cutting element.

It has further to be understood that the direction and angle of inclination of the second cutting edge may be identical to the direction and angle of inclination of the first cutting edge. Alternatively, the direction and angle of inclination of the first and second cutting edges may be different, e.g. in the case that first and second chains of clips are different.

Advantageously, also the second cutting element may detachably be mounted to the first closing tool whereby an easy exchange is enabled, in the case that the cutting element is blunt or damaged. Alternatively, the second cutting element and the first closing tool may be formed integrally.

The first and/or the second cutting edges may have any suitable form, as long as they at least partially incline. The inclination can be formed by one or more straight line sections and/or by one or more, preferably convex and/or curvatures to which one or more tangents can be applied, which enclose the angle with the horizontal or vertical.

According to a preferred design, the cutting edge, i.e. the first and/or the second cutting edge, may include at least one concave or convex, preferably approximately semi-circular portion, preferably in the centre of the cutting edge. The first and/or second cutting edge may have a linear shape. In a simple case, the cutting edge inclines over its entire length. Alternatively, the cutting edge has a first and a second end, and includes a first cutting edge portion inclining towards the centre of the cutting edge from its first end, and a second cutting edge portion inclining towards the centre of the cutting edge from its second end. Further alternatively, the cutting edge has a waveform, which may be a regular wave, like a sinus-wave, or an irregular wave having mountains and valleys of different height and/or length.

The first and/or the second cutting edges may include more than two linear cutting edge portions, which have different inclinations, or the first and/or the second cutting edges may include a combination of one or more linear cutting edge portions with one or more concave or semi-circular portions.

Theses specific designs enable a safe shearing-or cutting-off of a closure clip from a chain of clips, with a reduced force acting on the cutting edge, whereby its shelf life is extended.

It has to be noted that all these shapes described above can be combined with each other. It has further to be noted that the shape of the curvature, the inclination angle or the wave from of the cutting edge may be selected dependent on the size of the closure clips to be processed or the material of the closure clips. The shape of the cutting edge may also have influence to the production speed of the clipping machine.

In a preferred embodiment of the inventive closing tool system, the first closing tool has an at least approximately cuboid body which includes a top side, a bottom side, a front side, a rear side, a right side and a left side, wherein the at least first closing portion is arranged at the bottom side, for closing the closure clip, and the cutting element is formed by an edge of the at least first closing portion. This allows a simple design of the first closing tool, with reduced production costs.

In this embodiment, it is preferred that also the second closing portion is arranged at the bottom side for effecting the closure of the closure clip. Further preferably, second cutting element is formed by an edge of the second closing portion. Thereby, a first closing tool for effecting the closure of two closure clips is provided, that has a simple design, with reduced production costs.

It is further of advantage, that the inventive closing tool system comprises a second closing tool, preferably a die. The second closing tool is arranged below the first closing tool, when mounted to a clipping machine, and is configured to shear- or cut-off the first closure clip of the first chain of closure clips, for effecting the closure of the first closure clip on the plait-like portion of a gathered tubular or bag-shaped packaging casing. The second closing tool may include at least a first, preferably blade-shaped cutting element having a cutting edge, for cutting off at least the first closure clip from the first chain of closure clips, and the at least first cutting element of the second closing tool is configured to cooperate with the at least first cutting element of the first closing tool.

Thereby, a safe closing operation of shearing- or cutting-off the first closure clip from the first chain of closure clips is enabled.

In a further preferred embodiment, the second closing tool further comprises a second, preferably blade-shaped cutting element, for cutting-off a first closure clip from a second chain of closure clips, and the second cutting element of the second closing tool is configured to cooperate with the second cutting element of the first closing tool, for securely shearing or cutting off a first closure clip from a second chain of closure clips.

The first and the second cutting element of the second closing tool may be of any suitable design. In one embodiment, the first and/or the second cutting element of the second closing tool may removably or detachably mounted or fixed to the second closing tool, whereby an easy exchange is enabled, in the case that the cutting element is blunt or damaged. Alternatively, the first and or the second cutting element and the second closing tool are formed integrally.

In a preferred embodiment, the second closing tool has an at least approximately cuboid body which includes a top side, a bottom side, a front side, a rear side, a right side and a left side, and at least a first receiving portion arranged on the top side of the cuboid body, for receiving the first closure clip of the first chain of clips, and the first cutting element extends upwardly from the top surface of the cuboid body, in the region of its rearward edge, In this embodiment, it is further preferred that the second closing tool further comprises a second receiving portion for receiving the first closure clip of the second chain of clips, and further preferably, the second cutting element extends upwardly from the top surface of the cuboid body, in the region of its rearward edge. Thereby, also to the second closing tool has simple design with reduced production costs.

The first and/or the second cutting element of the second closing tool may have any suitable shape, which allows to securely shear-off or cut-off a first closure clip from a first and/or a second chain of closure clips. In a preferred design, each of the first and/or second cutting element of the second closing tool has an even front side and an at least approximately even rear side, aligned at least approximately parallel to each other, and the upper end of the rear side transits into the cutting edge by a curved end portion, preferably an at least approximately semi-circular end portion. Thereby a secure and at least approximately form-fit engagement of the cutting elements into the gap between the respective first closure clip and the following closure clip in the first and/or second chain of closure clips is enabled, thereby improving the cutting process.

Further according to the present invention, there is provided a closure clip for separating and closing filled compartments of a substantially tubular or bag-shaped packaging material, the closure clip being movable from an open configuration to a closed configuration, preferably by a closing tool system according to the present invention The closure clip comprises two, preferably straight leg portions connected by a preferably semi-circular bottom portion, each comprising an inner and an outer surface, the inner surface being configured to be exposed to the container, the leg portions being angled with regard to a centre axis defined in the centre of the closure clip, and in a common plane with the bottom portion, the inner and outer surface of the bottom portion following a substantially continuous arc between the leg portions, and two connecting portions at each upper end of the leg portions extending at least partially in a direction perpendicular to the centre plane and being configured to connect a closure clip to another closure clip to form a chain of closure clips. The end sections of the inner surfaces of the connecting portions are shaped such that they form at least approximately an arc of at least substantially continuous curvature, the shape of the arc of the connection portions preferably matches the shape of the curved end portion of the cutting element of the second closing tool.

The designs of inventive closure clips and the inventive closing tools are coordinated to each other such that the cutting process as well as the placing and closing process of the closure clips are enhanced, and the production of sausage-shaped products is optimized.

There is further provided a clip for separating and closing filled compartments of a substantially tubular shaped casing made of a casing material, the clip being movable from an open configuration to a closed configuration The clip comprises two leg portions connected by a bottom portion, each comprising an inner and an outer surface, the inner surface being configured to be exposed to the casing. The leg portions are angled with regard to a center axis defined in the center of the clip, such that the leg portions extend in a direction mainly parallel to the center axis, such that the clip is symmetric to a center plane which extends at least substantially perpendicular to the longitudinal extension of the bottom portion and which includes the center axis. The inner and outer surface of the bottom portion follow a substantially continuous arc between the leg portions. Two connecting portions at each upper end of the leg portions extend at least partially in a direction at least approximately perpendicular to the center plane and are configured to connect a clip to another clip to form a string of clips, wherein the end sections of the outer surfaces of the connecting portions are shaped such that they form at least approximately an arc of at least substantially continuous curvature extending to an end of the connecting portions.

Preferably, the cross-sectional profile of the clip is at least substantially constant for the leg portions and the bottom portion and preferably wherein the thickness of the connecting portion is smaller than the thickness of the leg portions.

It is further preferred, that, when in the closed configuration, the curvature of the bottom portion substantially remains the same as in the open configuration, while the leg portions are folded inwards towards the inner surface of the bottom portion such that the free front ends of the side portions are at least partially in contact with each other.

Advantageously, when in the closed configuration, the inner surfaces of the leg portions and the bottom portion are configured to define a space for receiving a gathered casing material, which is at least approximately completely enclosed by the leg portions and the bottom portion.

Selectively, when in the closed configuration, the front sections of the connecting portions are configured to be at least approximately flush with the outer surfaces of the remaining sections of the leg portions.

It is further preferred, that the outer surface of the leg portions and the bottom portion is substantially planar.

In a more preferred embodiment of the invention, the clip is made of metal, preferably wherein the clip is made of aluminium or an alloy including aluminium.

The invention is further defined such that the clip comprises one or more grooves on the inner surface of the leg portions and the bottom portion, desirable wherein the clip comprises two grooves on the inner surface of the leg portions and the bottom portion.

Preferably, the one or more grooves extend at least substantially along the total length of the inner surface of the leg portions and the bottom portion.

Further preferred, the one or more grooves have a V-shaped or U-shaped cross-section.

Advantageously, when in the closed configuration, the inner surface of the leg portions are curved, preferably wherein the inner surface of the leg portions are curved towards the inner surface of the bottom portion.

Selectively, when in the closed configuration, the curvature of the bottom portion is larger than the curvature of the leg portions.

Preferably, end sections of the outer surfaces of the connecting portions comprise an indent wherein the indent extends along a horizontal surface of the connecting portions and/or wherein the indent extends along a vertical surface the connecting portions.

Preferably, the transition from the open configuration to the closed configuration is irreversible.

A string of clips comprises a plurality of clips, wherein except the first and the last clip of the string each clip is connected to two other clips at the respective connecting portions at each leg portions, and the connecting portions of two adjacent clips form a connecting region of the string of clips. The outer surfaces of the connecting region defines an arc of at least substantially continuous curvature between each clip.

Preferably, the string of clips is made of single strip of material.

Further advantages and preferred embodiments of the present invention will be described in the following together with the drawings listed below. The expressions *"left", "right", "below"* and *"above"* used in the following description, are referred to the drawings in an alignment such that the reference numbers and the notation of the figures used can be read in normal orientation.
- Fig. 1:: is a schematic view showing the principal design of a clipping machine for producing sausage-shaped products;
- Fig. 2:: is a perspective view to the front side of a first embodiment of a closing tool system according to the present invention;
- Fig. 3:: is a perspective view to the rear side of a second embodiment of a closing tool system according to the present invention;
- Fig. 4:: is a perspective view to the rear side of a third embodiment of a closing tool system according to the present invention;
- Fig. 5:: is a perspective view to the rear side of a fourth embodiment of a closing tool system according to the present invention;
- Fig. 6:: is a perspective view to the front side of the first embodiment of a closing tool system according to Fig. 2, with a chain of closure clips according to the present invention; and
- Fig. 7:: is a plan view to the left side of the closing tool system according to Fig. 6.

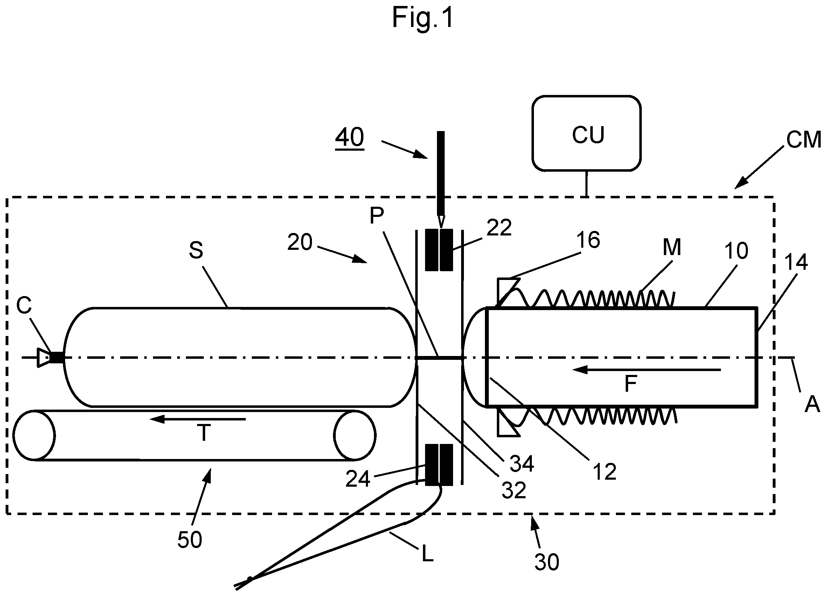

Fig. 1 shows the principal design of a clipping machine CM for producing sausage-shaped products S, such as sausages, containing a flowable or granular filling material in a tubular packaging casing M. Clipping machine CM has a filling tube 10, the central axis A of which extends in the longitudinal direction and, in the embodiment shown, horizontally. The longitudinal direction coincides with a filling direction F of a filling material.

Filling tube 10 has a discharge opening at its first end 12 for discharging a filling material fed or guided through filling tube 10 and a feeding opening at its second end 14 for feeding or introducing the filling material into filling tube 10 along filling direction F. The filling material is conveyed or fed from the feeding opening in filling direction F to the discharge opening of filling tube 10, for example by a feed pump of a filler being located right from clipping machine CM.

Moreover, a casing brake assembly 16 is arranged on and coaxially to filling tube 10 in the region of first end 12 of filling tube 10. Filling tube 10 is made of a suitable material, such as stainless steel. In addition to the horizontal orientation shown, filling tube 10 can also extend at an angle to the horizontal.

Tubular packaging casing M made of, for example, a thin sheet or film material is mounted or stored on filling tube 10 folded in an accordion like manner. Tubular packaging casing M is pulled-off during the manufacturing process of producing sausage-shaped products S, in particular by the feeding pressure, when the filling material is filled into tubular packaging casing M. Casing brake assembly 16 provides a preferably adjustable braking force which enables a controlled pulling-off of tubular packaging casing M from filling tube 10 during the filling process.

Clipping machine CM further comprises gathering means 30 for gathering or shirring a section of the filled tubular packaging casing M and forming a plait-like portion or section P thereto. In addition, a clipping tool unit 20 is provided for closing a portion of tubular packaging casing M just filled by applying or attaching closure means, such as at least a first closure clip C, to plait-like portion P and preferably closing the front end of the next section of tubular packaging casing M to be filled subsequently by further closure means, such as a at least one further or second closure clip C. These components are all arranged downstream filling tube 10.

As can be inferred from Fig. 1, clipping tool unit 20 is positioned immediately downstream first end 12 of filling tube 10, and is aligned coaxially with filling tube 10, i.e. when closing tools of clipping tool unit 20 are reversibly moved together to close one or more closure means C, the axis of the plait-like portion P extends at least approximately coaxially to central axis A of filling tube 10.

Clipping tool unit 20 comprises first and second clipping or closing tools 22, 24 formed by at least one punch 22 and at least one die 24. It should be noted that punch 22 and die 24 can apply and close a single closure clip C for closing a just filled tubular packaging casing M, or can apply and close two or more closure clips C at the same time, at least a first closure clip C for closing the rear end of a just filled tubular packaging casing M for forming a complete sausage-shaped product S and at least a second closure clip C for closing the front end of a tubular packaging casing M to be subsequently filled.

For separating a sausage-shaped product S just produced from the remaining tubular packaging casing M stored or supported on filling tube 10, a cutting device 40 may be provided. Said cutting device 40 cuts the tubular packaging casing M, referred to filing direction F, upstream of closure clip C that closes the just filled portion of tubular packaging casing M. In case that two closure clips C have been applied to plait-like portion P by clipping tool assembly 20, cutting device 40 cuts plait-like portion P between said two closure clips C.

To remove a sausage-shaped product S just produced from clipping machine CM in a transportation direction T, which at least substantially coincides with filling direction F, a discharge device 50 is arranged downstream clipping machine CM, which may be a belt conveyor comprising a conveyor belt and guide rollers.

For controlling clipping machine CM, a control unit CUC is provided, to which the components of clipping machine CM are connected. Moreover, control unit CU may also control peripheral devices, like discharge device 50 or a filler which feeds the filling material to clipping machine CM.

If it is intended to store sausage-shaped products S on a rod-like element, such as a smoking rod, e.g. for further processing, such as cooking or smoking, a suspension element L, such as a suspension loop, may be provided and attached to one end of each sausage-shaped product S or to one end of a chain of sausage-shaped products S. A feeding device feeds suspension elements L to one of closing tools 22, 24 which attach suspension element L to a respective end of sausage-shaped product S by means of a closure clip C which closes said end of sausage-shaped product S.

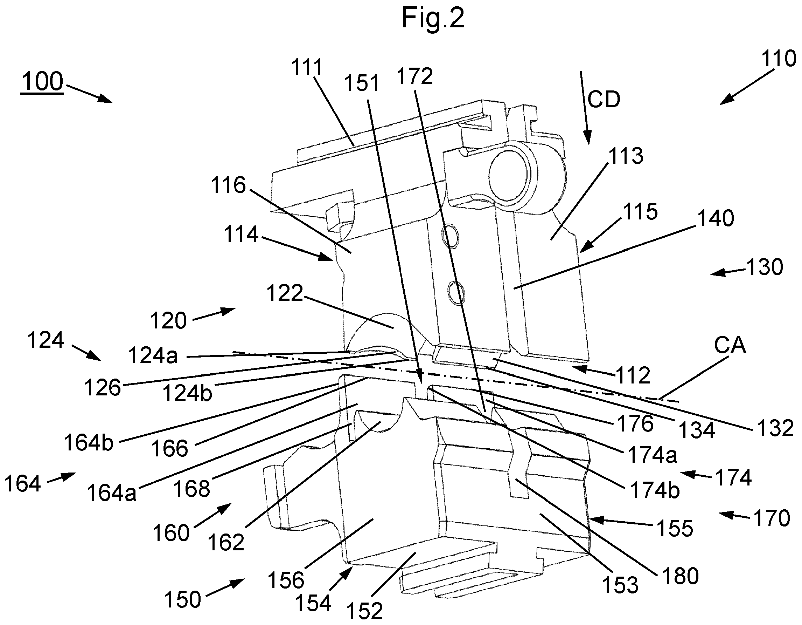

Fig. 2 is a perspective view to the front side of a first embodiment of a closing tool system 100 according to the present invention. Closing tool system 100 has a first closing tool 110 in the form of a punch, and a second closing tool 150 forming a die. Between first and second closing tools 110, 150, a closing axis CA is defined, which at least approximately coincides with the axis of plait-like portion P or central axis A of filling tube 10 (cf. Fig. 1).

First closing tool or punch 110 has an at least approximately cuboid body with a top side 111, a bottom side 112, a front side 113, a rear side 114, a right side 115 and a left side 116.

First closing tool or punch 110 further has a first body portion 120 and a second body portion 130, which are partially separated by an at least approximately vertically arranged slot 140.

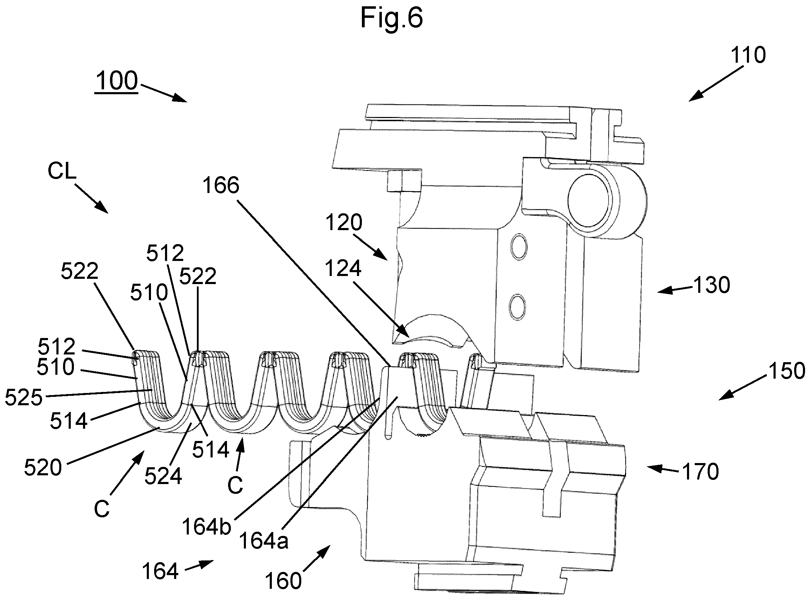

At the bottom side 112 of punch 110 is provided with a concave recess, which extends from its left side 116 to its right side 115 and over first and second body portions 120, 130. Thereby, in first body portion 120, a first closing portion 122 is formed, and in second body portion 130, a second closing portion 132 is formed. The edges of the concave recess, or the closing portions 122, 132 respectively, form the lower front and rear edges of front side 113 and rear side 114 of the body of punch 110. Closing portion 122 is provided with a rear edge portion 124, and closing portion 132 includes a rear edge portion 134. Rear edge portions 124, 134 constitute cutting edges 124, 134 for cutting off a first closure clip C from a chain of closure clips CL (cf. Fig. 6).

As shown in Fig. 2, rear edge portion or cutting edge 124 of first closing portion 122 has a first end 124a, a second end 124b and a concave portion 126 arranged in the centre of the cutting edge 124, between two linear portions aligned parallel to closing axis AC. It is also possible that concave portion 126 extends from first end 124a to second end 124b, without any linear portion there between.

In contrast to cutting edge 124 of first closing portion 122, cutting edge 134 of second closing portion 132, which represents the prior art, has a linear shape and is arranged parallel to closing axis AC. It has to be understood that cutting edge 134 of second closing portion 132 of first closing tool 110 preferably has a shape that corresponds to the shape of cutting edge 124 of first closing portion 122.

Second closing tool 150 has an at least approximately cuboid body with a top side 151, a bottom side 152, a front side 153, a rear side 154, a right side 155 and a left side 156.

Second closing tool or die 150 further has a first body portion 160 and a second body portion 170, which are partially separated by an at least approximately vertically arranged slot 180.

Top side 151 of die 150 is provided with a concave recess, which extends from its left side 156 to its right side 155 and over first and second body portions 160, 170. The recess forms a first receiving portion 162 in first body portion 160 of second closing tool 150, for receiving the first closure clip C in the first chain of closure clips CL (cf. Fig. 6), and a second receiving portion 172 in second body portion 170, for receiving the first closure clip C of the second chain of closure clips CL.

A first cutting element 164 extends upwardly from the rear edge of first body portion 160. Frist cutting element 164 has a front side 164a facing towards first receiving portion 162, and a rear side 164b facing away from first receiving portion 162.

As can be seen in Fig. 2, the upper end of rear side 164b of cutting element 164 transits into front side 164a by an at least approximately semi-circular portion, which forms a cutting edge 166 of cutting element 164.

First cutting element 164 is arranged parallel to closing axis AC, with a gap 168 between its front side 166a and receiving portion 162.

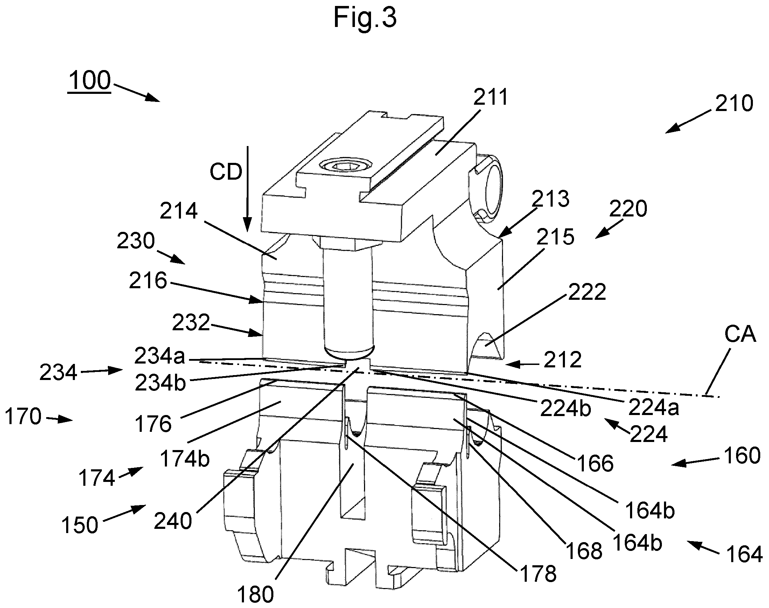

A second cutting element 174 extends upwardly from the rear edge of second body portion 170. Second cutting element 174 has a front side 174a facing towards second receiving portion 172, and a rear side 174b (cf. Fig. 3) facing away from second receiving portion 172.

As can be seen in Fig. 2, the upper end of rear side 174b of cutting element 174 transits into front side 174a by an at least approximately semi-circular portion, which forms a cutting edge 176 of second cutting element 174.

Fig. 3 is a perspective view to the rear side of a second embodiment of closing tool system 100 according to the present invention.

In the second embodiment, closing tool system 100 has a first closing tool 210 in the form of a punch, and a second closing tool forming a die, and which is identical to second closing tool 150 of Fig. 2. Thus, in the following, only first closing tool 210 will be explained in detail. Between first closing tool 210 and second closing tool 150, a closing axis CA is defined.

First closing tool 210 of the second embodiment differs from first closing tool 110 of the first embodiment only by the shape of the cutting edges, as will be explained below.

As first closing tool 110 according to the first embodiment, also first closing tool 210 of the second embodiment has an at least approximately cuboid body with a top side 211, a bottom side 212, a front side 213, a rear side 214, a right side 215 and a left side 216.

First closing tool or punch 210 further has a first body portion 220 and a second body portion 230, which are partially separated by an at least approximately vertically arranged slot 240.

At the bottom side 212 of punch 210 is provided with a concave recess, which extends from its left side 216 to its right side 215 and over first and second body portions 220, 230. Thereby, in first body portion 220, a first closing portion 222 is formed, and in second body portion 230, a second closing portion 232 is formed. The edges of the concave recess, or the closing portions 222, 232 respectively, forms the lower front and rear edges of front side 213 and rear side 214 of the body of punch 110. Closing portion 122 is provided with a rear edge portion 224, and closing portion 232 includes a rear edge portion 134. Rear edge portions 224, 234 constitute cutting edges 224, 234.

As shown in Fig. 3, cutting edge 224 of first closing portion 222 has a linear shape, with a first end 224a and a second end 224b, and is inclined such that first end 224a of cutting edge 224, which faces towards left side 216 of first closing tool 210 is closer to closing axis CA than second end 224b of cutting edge 224, which faces towards right side 215 of first closing tool 210.

As further can be seen in Fig. 3, second cutting edge 234 of second closing portion 232 has a first end 234a and a second end 234b, and is inclined in the counter direction, such that second end 234b of cutting edge 234 facing towards right side 215 of first closing tool 210 is closer to closing axis CA than first end 234a of cutting edge 224, which faces towards left side 216 of first closing tool 210.

The angle of inclination of first and second cutting edges 224, 234, in this embodiment, is equal. However, it is also possible that the angles of inclination of cutting edges 224, 234 may be different.

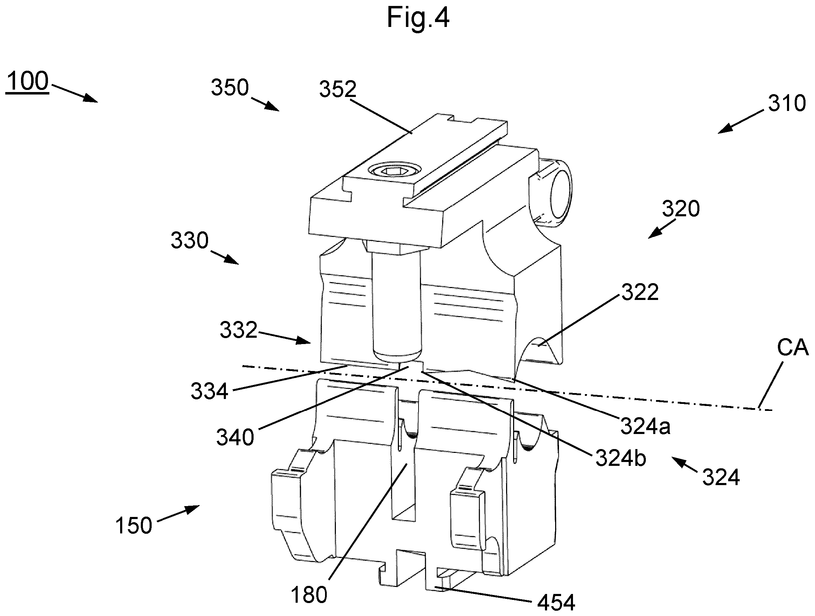

Fig. 4 is a perspective view to the rear side of a third embodiment of closing tool system 100 according to the present invention.

In the third embodiment, closing tool system 100 has a first closing tool 310 in the form of a punch, and a second closing tool forming a die, and which is identical to second closing tool 150 of Fig. 2. Between first closing tool 310 and second closing tool 150, a closing axis CA is defined.

Also first closing tool 310 of the third embodiment differs from first closing tool 110 of the first embodiment only by the shape of the cutting edges 324, 334, as will be explained below.

First closing tool or punch 310 has a first body portion 320 and a second body portion 330, which are partially separated by an at least approximately vertically arranged slot 340.

At the bottom side of punch 310 a concave recess is provided, which forms a first closing portion 322 in first body portion 320, a second closing portion 332 in second body portion 330. The rear edge of the concave recess constitutes cutting edges 324, 334 to first and second closing portion 322, 332.

As can be seen in Fig. 4, cutting edge 324 of first closing portion 322 has a first end 324a and a second end 234b. Two linear portions extend between first end 324a and second end 234b. Each linear portion inclines from the outer ends of cutting edge 324, i.e. from first end 324a and second end 324b, respectively, towards its centre of cutting edge 324. Cutting edge 324 thereby is angled, with its first and second ends 324a, 324b closer to closing axis CA than its centre.

The angles of inclination of the linear cutting edge portions of cutting edge 324, in this embodiment, are equal. However, it is also possible that the angles of inclination may be different.

In contrast to cutting edge 324 of first closing portion 322, also in Fig. 4, cutting edge 334 of second closing portion 332, represents the prior art, and has a linear shape being arranged parallel to closing axis CA. It has to be understood that also cutting edge 334 may have a shape equal to the shape of cutting edge 324.

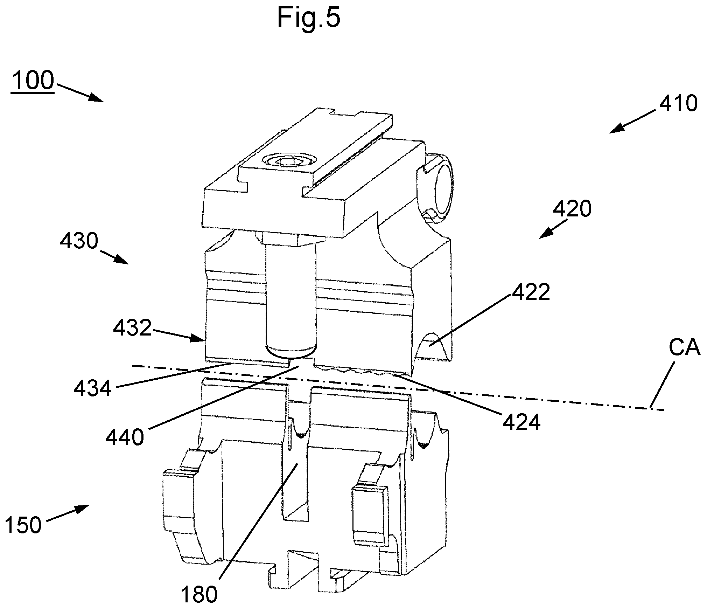

Fig. 5 is a perspective view to the rear side of a fourth embodiment of closing tool system 100 according to the present invention.

Closing tool system 100 of the fourth embodiment has a first closing tool 410 in the form of a punch, and a second closing tool forming a die, and which is identical to second closing tool 150 of Fig. 2. Between first closing tool 410 and second closing tool 150, a closing axis CA is defined.

First closing tool 410 differs from first closing tools 110, 210, 310 according to the first to third embodiments by the shape of its first cutting edge 424, which has the shape of a uniform wave extending parallel to cutting axis AC, with a plurality of mountains and valleys having the same length and height, like a sinus-wave.

However, cutting edge 424 may also have the shape of a non-uniform wave, or may have only one mountain and one wave, or a mountain between two halve valleys, or one valley between two half mountains

Also in Fig. 5, cutting edge 434 of second closing portion 432 has a linear shape arranged parallel to closing axis AC, and represents the prior art. Naturally, also cutting edge 434 may have a shape that is identical to the shape of cutting edge 424.

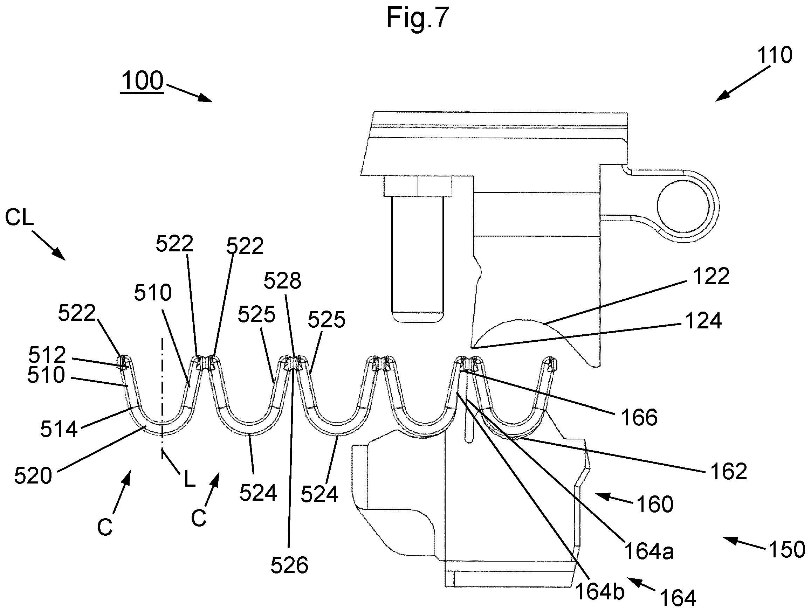

Fig. 6 is a perspective view to front side 113 of the first embodiment of closing tool system 100 according to Fig. 2, with a chain of closure clips CL according to the present invention, and Fig. 7 is a plan view to the left side of closing tool system 100 of Fig. 6.

As can be seen in Figs. 6 and 7, each closure clip C has two leg portions 510 with first ends 512 and second ends 514, and a bottom portion 520, which connects leg portions or legs 510 by their second ends 514. Legs 510 are at least approximately straight portions, and bottom portion 520 has an at least approximately semi-circular shape. Legs 510 and bottom portion 520 are arranged in a common plane, and legs 520 diverge from each other and from a centre line L, towards their first ends 512.

At each of first ends 512 of closure legs 510, a connecting portion 522 is arranged. Connecting portions 522 of a closure clip C are arranged in a common plane together with legs 510 and bottom portion 520, and extend in a direction at least approximately perpendicular to centre line L of closure clip C.

A plurality of closure clips C may be connected to each other by their connecting portions 522, thereby forming a chain of clips, a portion of which is shown in Figs. 6 and 7.

Legs 510 and bottom portion 520 have an inner surface 525 and an outer surface 524. As can be seen in Figs. 6 and 7, inner and outer surfaces 525, 524 of bottom portion following a substantially continuous arc between the leg portions.

When forming a chain of closure clips CL, the surface of two neighbouring connecting portions 522, which extends between the outer surfaces 524 of two closure clips C connected to each other, forms an inner surface 526 of the connecting portions 522, whereas the surfaces of connecting portions 522 arranged between inner surfaces 525 of two neighbouring closure clips C of a chain of closure clips CL, form an outer surface 528 of connection portions 522.

Connecting portions 522 have a shape, that at least inner surface 526 has an arc-shape, preferably, a semi-circular shape. As particularly can be seen in Fig. 7, the shape of inner surface 526 of connecting portion 522 matches the curvature or semi-circular portion by which rear side 164b of cutting element 164 of second closing tool 150 transits into front side 164a, and which forms cutting edge 166 of cutting element 164.

As explained in conjunction with Fig. 2, first and second body portions 120, 130 of first closing tool 110 are partially separated by at least approximately vertically arranged slot 140, and first and second body portions 160 170 of second closing tool 150 are partially separated by an at least approximately vertically arranged slot 180. Slots 140, 180 are aligned approximately vertically above each other, and provide a path along which a cutting element of cutting device 40 is moved for separating the sausage-shaped product S just produced from the remaining supply of tubular packaging casing M.

As further can be seen in Figs. 2 to 7, and as particularly referred in Fig. 4, first closing tools 110, 210, 310, 410 and second closing tool 150 are provided with a mounting arrangement 450 which includes a first linear guide 452 on top side of first closing tools 110, 210, 310, 410 and a second linear guide on the bottom side of second closing tool 150. By mounting arrangement 450 first and second closing tools 110 (210, 310, 410), 150 may easily be mounted or demounted to or from clipping machine CM.

For producing sausage-shaped products S on clipping machine CM, tubular packaging casing M stored on filling tube 10 of clipping machine CM and closed at its front end by a closure clip C, is filled with filling material that is fed through filling tube 10 into tubular packaging casing M in feeding direction F. After a predetermined portion of filling material is fed into tubular packaging casing M, upper and lower displacer elements of first and second displacer units 32, 34 are moved from their open position to their closed position to form a gathered portion or section to filled tubular packaging casing M. Thereafter, first displacer unit 32 carries out a linear movement in a horizontal direction and coaxially to feeding direction F. As a result, a plait-like portion P is formed on the gathered or shirred portion of tubular packaging casing M and two closure clips C are applied to plait-like portion P, the central axis of which at least approximately coincides with closing axis CA, and closed by clipping device 20, a first closure clip C for closing the just filled tubular packaging casing M for forming a complete sausage-shaped product S, and a second closure clip C for closing the front end of sausage-shaped product S subsequently to be produced. A suspension element L, which may be provided by feeding device, can be attached to one end of sausage-shaped product S by means of one of closure clips C. For severing just produced sausage-shaped product S from the remaining supply of tubular packaging casing M, cutting device 40 is activated so that plait-like portion P is cut between two closure clips C just set and the sausage-shaped product S just produced can be discharged from clipping machine CM by discharge device 50. Suspension element L of sausage-shaped product S just produced may be by caught by a respective catching unit and guided towards a rod-like element, e.g. provided in a hanging line, to be suspended therefrom by suspension element L.

For placing and closing one or two closure clips C on plait-like portion P, the first closure clip C in the chain of closure clips CL is placed with its bottom portion 520 in one or both of receiving portions 162 and/or 172 of first closing tool 150, i.e. by a respective clip drive. In this situation, first and second closing tools 110, 150 are remote from each other.

After a plait-like portion P is formed to a filled portion of tubular packaging casing M, and is placed in closing axis CA, first and second closing tools are moved towards each other.

Second closing tool 150 reaches the closing position, in which plait-like portion P is placed in closure clip C positioned in receiving portion 162 of first closing tool 150. Immediately after that, also first closing tool 110 reaches the closing position. When moving first closing tool 110 in closing direction CD towards second closing tool 150, cutting edge 124 of first closing tool 110 comes into contact with outer surface 528 of connecting portions 522, which connect this first closure clip C that is positioned in second closing tool 150, and the subsequent closure clip C in the chain of closure clips CL.

By further movement of first closing tool 110 in closing direction CD towards second closing tool 150, cutting element or cutting edge 124 of first closing tool 110 shears along cutting edge 166 of cutting element 164 of second closing tool 150, and cuts off the first closure clip C from the chain of closure clips CL. During further movement of first and second closing tools 110, 150 towards each other, first ends 512 of legs 510 of closure clip C are guided around plait-like portion P along first closing portion 122 of first closing tool 110, whereby closure clip C is closed.

In the embodiments of first closing tool 210, 310, according to Figs. 3 and 4, the inclination of cutting edge 234 and the inclination of the cutting edge portions of cutting edge 234 includes an angle between approximately 1 degree and 15 degrees referred to the horizontal. It has to be noted that other angle of inclination may be selected, like between 1 degree and 30 degree. Preferably, the angle of inclination is selected between 1degree and 10 degrees.

Due to the specific shape of cutting edges 124, 224, 324, 424, the contact area between outer surface 528 of connecting portions 522 and cutting edges 124, 224, 324, 424 is point-shaped, the force acting on connecting portions 522 for cutting off a closure clip C from the chain of closure clips CL, is reduced compared to cutting edges known in the art. Thereby, cutting edges 124, 224, 324, 424 are protected against getting blunt or parts breaking there off, their maintenance cycle is extended, and the costs are reduced.

Alternatively or additionally, due to the reduced shearing or cutting force necessary to shear-off a closure clip from the chain of closure clips, the cutting or shearing step may be executed at a higher speed, thereby, the production process may be shortened.

## Claims

1. A closing tool system (100) for closing at least one closure clip (C) around an at least approximately content-free plait-like portion (P) of a sausage-shaped product (S), the plait-like portion (P) defining a closing axis (CA), in a clipping machine (CM) for producing sausage-shaped products (S), like sausages, by reversibly moving the closing tool system (100) in a closing direction (CD), the system (100) comprising:
a first closing tool (110; 210; 310; 410), preferably a punch, having at least a first closing portion (122; 222, 322, 422) for effecting the closure of a first closure clip (C) in a first chain of closure clips (CL), and
a first cutting element (124; 224; 324; 424) being part of the first closing tool (110; 210; 310; 410) and having at least one cutting edge (124; 224; 324; 424) for shearing-off the first closure clip (C) from the first chain of closure clips (CL) wherein the cutting edge (124; 224; 324; 424) extends at least approximately in the same direction as the closing axis (CA),
wherein the cutting edge (124; 224; 324; 424) is at least partially inclined with respect to a direction parallel to the closing axis (CA).

2. The closing tool system (100) according to claim 1,
wherein the first cutting element (124; 224; 324; 424) is detachably mounted to the first closing tool (110; 210; 310; 410), or
wherein the first cutting element (124; 224; 324; 424) and the first closing tool (110; 210; 310; 410) are formed integrally.

3. The closing tool system (100) according to claims 1 or 2,
wherein the first closing tool (110; 210; 310; 410) comprises a second closing portion (132; 232; 332; 432) for effecting the closure of a first closure clip (C) in a second chain of closure clips (CL),with a second cutting element (134; 234; 334; 434), preferably, wherein a gap (140; 240; 340; 440) is provided between the first and second closing portion (122; 222, 322, 422) and/or the first and second cutting element (124; 224; 324; 424; 134; 234; 334; 434),
wherein the second cutting element (134; 234; 334; 434) has at least one cutting edge (134; 234; 334; 434) for shearing-off the first closure clip (C) from the first chain of closure clips (CL), and
wherein the cutting edge (124; 224; 324; 424) is at least partially inclined with respect to a direction parallel to the closing axis (CA).

4. The closing tool system (100) according to any of claims 1-3,
wherein the second cutting element (134; 234; 334; 434) is detachably mounted to the first closing tool (110; 210; 310; 410), or
wherein the second cutting element (134; 234; 334; 434) and the first closing tool (110; 210; 310; 410) are formed integrally.

5. The closing tool system (100) according to any of claims 1-4,
wherein the cutting edge (124; 134) includes at least one concave, preferably approximately semi-circular portion (126), preferably in the centre of the cutting edge (124; 134).

6. The closing tool system (100) according to any of claims 1-4,
wherein the cutting edge (224; 234) is inclined over its entire length.

7. The closing tool system (100) according to any of claims 1-4,
wherein the cutting edge (324) has a first and a second end (324a, 324b) and includes a first cutting edge section inclined from its first end (324a) toward the center of the cutting edge (324) and a second cutting edge section inclined from its second end (324b) toward the center of the cutting edge (324), preferably wherein a gap is provided between the first and second cutting edge section.

8. The closing tool system (100) according to any of claims 1-4,
wherein the cutting edge (424) has at least partially a waveform.

9. The closing tool system (100) according to any of claims 3-8,
wherein the first closing tool (110; 210; 310; 410) has an at least approximately cuboid body which includes a top side (111: 211), a bottom side (112; 212), a front side (113; 213), a rear side (114; 214), a right side (115; 215) and a left side (116; 216), wherein the at least first closing portion (120; 220; 320; 420) is arranged at the bottom side (112; 212), for effecting the closure of the closure clip (C), and
wherein the first cutting element (124; 224; 324; 424) is formed by an edge of the at least first closing portion (120; 220; 320; 420), and
wherein, preferably the second closing portion (132; 232; 332; 432) is arranged at the bottom side (112; 212) for effecting the closure of the closure clip (C),
wherein further preferably, second cutting element (134; 234; 334; 434) is formed by an edge of the second closing portion (132; 232; 332; 432).

10. The closing tool system (100) according to any of claims 1-9,
further comprising a second closing tool (150), preferably a die, wherein second closing tool (150) is arranged below the first closing tool (110; 210; 310; 410) when mounted on a clipping machine (CM), and is configured to shear-off the first closure clip (C) of the first chain of closure clips (CL) for effecting the closure of the first closure clip (C) on the plait-like portion (P) of a gathered tubular or bag-shaped packaging casing (M),
wherein the second closing tool (150) includes at least a first, preferably blade-shaped cutting element (164) having a cutting edge (166), for cutting off at least the first closure clip (C) from the first chain of closure clips (CL), and
wherein the at least first cutting element (164) of the second closing tool (150) is configured to cooperate with the at least first cutting element (124; 224; 324; 424) of the first closing tool (110; 210; 310; 410).

11. The closing tool system (100) according to claim 10,
wherein the second closing tool (150) further comprises a second, preferably blade-shaped cutting element (174), for cutting off the first closure clip (C) from the second chain of closure clips (CL), and
wherein the second cutting element (174) of the second closing tool (150) is configured to cooperate with the second cutting element (134; 234; 334; 434) of the first closing tool (110; 210; 310; 410).

12. The closing tool system (100) according to claims 10 or 11,
wherein the first cutting element (164) and/or the second cutting element (174) of the second closing tool (150) is detachably fixed to the second closing tool (150), or wherein the first cutting element (164) and the second closing tool (150) and/or the second cutting element (174 and the second closing tool (150) are formed integrally.

13. The closing tool system (100) according to any of claims 10-12,
wherein the second closing tool (150) has an at least approximately cuboid body which includes a top side (151), a bottom side (152), a front side (153), a rear side (154), a right side (155) and a left side (156), and at least a first receiving portion (162) arranged on the top side (151) of the cuboid body, for receiving the first closure clip (C) of the first chain of clips (CL), and
wherein the first cutting element (164) extends upwardly from the top surface (151) of the cuboid body, in the region of its rearward edge, and preferably,
wherein the second closing tool (150) further comprises a second receiving portion (172) for receiving the first closure clip (C) of the second chain of clips (CL), and
wherein further preferably, the second cutting element (174) extends upwardly from the top surface (151) of the cuboid body, in the region of its rearward edge.

14. The closing tool system (100) according to any of claims 10-13,
wherein the first and second cutting elements (164; 174) of the second closing tool (150) each have an even front side (164a; 174a) and an at least approximately even rear side (164b; 174b), being aligned at least approximately parallel to each other, and
wherein the upper end of the rear side (164b; 174b) transits into the cutting edge (166; 176) by a curved end portion, preferably an at least approximately semi-circular end portion.

15. A closure clip (C) for separating and closing filled compartments of a substantially tubular or bag-shaped packaging material (M), the closure clip (C) being movable from an open configuration to a closed configuration, preferably by a closing tool system (100) according to any claims 1-16, the closure clip (C) comprising:
two, preferably straight leg portions (510) connected by a preferably semi-circular bottom portion (520), each comprising an inner and an outer surface (514; 524), the inner surface (514) being configured to be exposed to the container,
the leg portions (510) being angled with regard to a centre axis (L) defined in the centre of the closure clip (C), and in a common plane with the bottom portion (520),
the inner and outer surface (514; 524) of the bottom portion (520) following a substantially continuous arc between the leg portions (510), and
two connecting portions (522) at each upper end (512) of the leg portions (510) extending at least partially in a direction perpendicular to the centre line (L) and being configured to connect a closure clip (C) to another closure clip (C) to form a chain of closure clips (CL),
wherein the end sections of the inner surfaces (526) of the connecting portions (522) are shaped such that they form at least approximately an arc of at least substantially continuous curvature, the shape of the arc of the connection portions (522) preferably matches the shape of the curved end portion of the cutting element (164) of the second closing tool (150).
